# EUROPÄISCHE PATENTSCHRIFT

(11) **EP 3 243 915 B1**
(45) Veröffentlichungstag und Bekanntmachung des Hinweises auf die Patenterteilung: **19.07.2023**
(21) Anmeldenummer: 17000831.2
(22) Anmeldetag: 15.05.2017
(51) Int. Cl.: C22B 19/38, C22B 7/02, B07B 4/00

(54) **VERFAHREN UND ANLAGE ZUM GEWINNEN VON HOCHREINEM WÄLZOXID AUS ZINKHALTIGEN ROHSTOFFEN MITTELS GEGENSTROMBETRIEBENEM DREHROHROFEN SOWIE VERWENDUNG IN VERFAHREN ZUR HERSTELLUNG VON ZINKMETALL UND ZINKVERBINDUNGEN WIE ZINKOXID**
METHOD AND DEVICE FOR EXTRACTING HIGH PURITY WAELZ OXIDE FROM ZINC-CONTAINING RAW MATERIALS USING A COUNTER-FLOW OPERATED ROTARY KILN , AND USE IN PROCESSES FOR THE PRODUCTION OF ZINC METAL AND ZINC COMPOUNDS AS ZINC OXIDE
PROCÉDÉ ET INSTALLATION DE PRODUCTION D'OXYDE WAELZ TRÈS PUR À PARTIR DE MATIÈRES BRUTES CONTENANT DU ZINC À L'AIDE DE FOUR ROTATIF À CONTRE-COURANT ET UTILISATION DANS LE PROCÉDÉ POUR LA FABRICATION D'UN METALL DE ZINC ET DE COMPOSÉS DE ZINC COMME OXYDE DE ZINC.

(30) Priorität: 13.05.2016 DE 102016005787
(43) Veröffentlichungstag der Anmeldung: 15.11.2017
(73) Patentinhaber: Befesa Zinc Duisburg GmbH, 47249 Duisburg (DE)
(72) Erfinder: von Billerbeck, Eckhard, 40822 Mettmann (DE); Flath, Thomas, 47239 Duisburg (DE); Dambauer, Maria, 47051 Duisburg (DE)
(74) Vertreter: Wirnsberger, Gernot

(56) Entgegenhaltungen:
- EP-A1- 0 654 538
- EP-A1- 1 088 904
- JP-A- S6 086 221
- US-A- 2 603 554
- AMIR MOEZZI ET AL: "Zinc oxide particles: Synthesis, properties and applications", CHEMICAL ENGINEERING JOURNAL,, vol. 185, 11 January 2012 (2012-01-11), pages 1-22, XP028460773, ISSN: 1385-8947, DOI: 10.1016/J.CEJ.2012.01.076 [retrieved on 2012-01-25]

## Beschreibung

### Gebiet der Erfindung

Die Erfindung betrifft ein Verfahren zum Gewinnen von hochreinem Wälzoxid aus zinkhaltigen Rohstoffen wie etwa Stäuben aus der Eisen- und Stahlherstellung nach dem Oberbegriff des Anspruchs 1 sowie ein Wälzoxid.

### Hintergrund der Erfindung

Zur Gewinnung sogenannter Wälzoxide aus zinkhaltigen Rohstoffen, die beispielsweise in Form trockener Stäube als Abfall- oder Nebenprodukte bei der Eisen- oder Stahlherstellung, vorrangig aus der Elektrostahlindustrie, anfallen, sind beispielsweise aus der EP 1 088 904 B1 oder der EP 0 654 538 B1 gattungsgemäße Verfahren unter Verwendung eines Drehrohrofens im Gegenstromverfahren bekannt. Bei den bekannten Verfahren entsteht Wälzoxid aus der Gasphase, Verunreinigungen resultieren einerseits aus dem mechanischen Übertrag, siehe u.a. DE 10 2006 021 315 A1, DE 44 36 918 C1, EP 1 088 904 A1, EP 0 654 538 A1. Der mechanische Übertrag ist nachteilig und muss aufwändig entfernt werden. Andererseits in Abhängigkeit der Zusammensetzung der Vorstoffe werden jene Komponenten der Vorstoffe, die leicht flüchtig sind, im Wälzprozess den Weg des Zinks gehen und so den Zinkinhalt des Produktes senken. Gemeinsam mit dem Zink und Blei gehen auch die Salze in das Produkt über. Fluor ist vor allem in Gegenwart von Kalzium problematisch in der Entfernung; Fluor führt zudem zur Korrosion der Kathodenbleche der nachgeschalteten elektrolytischen Zinkgewinnung. JP S60 86221 A offenbart ein Wälzverfahren zum Gewinnen von hochreinem Wälzoxid, wobei das Wälzoxid in einem Staubabscheider gewonnen wird. Das Wälzoxid wird dann mittels eines Windsichters gereinigt.

Beide Kategorien von Verunreinigungen verursachen bereits beim bewährten Einsatz von Wälzoxid, nämlich in der elektrolytischen Gewinnung von Zink, Probleme. Ein Teil kann durch Waschung oder Klinkern entfernt werden. Der mechanische Übertrag wird aber bis zur Laugenreinigung mitgeschleppt, es existiert kein Verfahren, um diese Verunreinigungen vor dem Auflösen des Wälzoxids im Elektrolyten, zu entfernen. Diese Verunreinigungen sind auch der Ausschlussgrund für alternative Einsatzgebiete für gewaschenes oder geklinkertes Wälzoxid.

### Zusammenfassung der Erfindung

Davon ausgehend liegt der Erfindung die Aufgabe zugrunde, ein Verfahren und eine Anlage zum Gewinnen von hochreinem Wälzoxid aus zinkhaltigen Rohstoffen wie etwa Stäuben aus der Eisen- und Stahlherstellung nach dem Oberbegriff des Anspruchs 1 sowie ein Wälzoxid zu schaffen, die die Nachteile im Stand der Technik überwinden.

Diese Aufgabe wird durch die Merkmale der Ansprüche 1, 5 und 10 gelöst.

Hierdurch wird einerseits das Zinkausbringen im Wälzprozess gesteigert und andererseits die Qualität des erzeugten Wälzoxides so gesteigert, dass es möglich wird, Wälzoxid alternativ einzusetzen mit besseren Ergebnissen, unter geringerem Aufwand in den nachfolgenden Prozessschritten sowie in Anwendungen, die bisher keine Option für den Einsatz von Wälzoxid waren.

Hierzu schafft die Erfindung ein Verfahren zum Gewinnen von hochreinem Wälzoxid aus zinkhaltigen Rohstoffen wie etwa Stäuben aus der Eisen- und Stahlherstellung, bei dem ein Drehrohrofen mit den Rohstoffen und ggf. Reaktionsstoffen beschickt wird, der Drehrohrofen im Gegenstromverfahren betrieben wird, wobei die Prozessabgase aus dem Drehrohrofen Zinkoxid führen, das in Abscheideaggregaten wie Elektrofilter oder dergleichen als Wälzoxid gewonnen wird, und wobei das gewonnene Wälzoxid an einer Abscheidestelle und/oder am zusammengeführten Gesamtproduktstrom einer Aufbereitungsanlage zur Abtrennung des mechanischen Übertrags, vorzugsweise einem Windsichter zugeführt wird.

Es ergibt sich durch den Windsichter eine erheblich verbesserte Abtrennung der Störstoffe, insbesondere des Fluors, und mithin eine Erhöhung des Zinkgehalts im 30 Wälzoxid. Der wirtschaftliche Vorteil besteht im aus dem erhöhten Zinkgehalt resultierenden höheren Wert des Wälzoxids sowie aus der Verringerung des "tauben Guts", für welches branchenübliche Treatment Fees entrichtet werden müssen.

Technisch ergeben sich neben dem höheren Zinkgehalt eine Verringerung der Korrosion der Kathodenbleche durch weniger Fluor im Elektrolyten, eine geringere Zementation sowie weniger Gips, mithin eine Verringerung der Wartungs- und Verschleißerscheinungen.

Mithin schafft die Erfindung ein Verfahren, bei dem Prozessabgase aus dem Drehrohrofen Zinkoxid führen, das in Abscheideaggregaten wie Elektrofilter oder dergleichen als Wälzoxid gewonnen wird und wobei das gewonnene Wälzoxid an einer Abscheidestelle und/oder am zusammengeführten Gesamtproduktstrom einem Windsichter oder einem ähnlichen Aggregat zur Abtrennung des mechanischen Übertrags zugeführt wird.

In diesem Prozessschritt ist es möglich, den mechanischen Übertrag aus dem Drehrohrofen, der 5 bis 20 % des produzierten Wälzoxid ausmacht, abzutrennen. Dies ist bisher einzigartig und ohne Vorbild im Stand der Technik.

Die Abscheidungen können dem Windsichter direkt aus einem Abscheideaggregat, wie etwa Filter, Staubkammer oder Prozessgaskühler, zugeführt werden und/oder aus dem zusammengeführten Gesamtproduktstrom.

In einer vorteilhaften Ausführungsform wird das Wälzoxid von einer Staubkammer und einem (Verdampfungs-)Kühler oder nur von einer Staubkammer dem Windsichter zugeführt und der dort abgetrennte Feinanteil wird gemeinsam mit dem Wälzoxid, das in einem Filter abgeschieden wird, direkt in einer Filteranlage des Gesamtprozesses (Prozessabgasfilter der Wälzanlage) abgeschieden. Dazu ist es zweckmäßig, den Abluftstrom des Windsichters, der dann die Feinfraktion aus Staubkammer und dem (Verdampfungs-)Kühler oder nur der Staubkammer führt, in den Prozessabgasstrom vor dem Filter einzuleiten. Diese Anordnung weist den Vorteil auf, dass der Windsichter kleiner dimensioniert werden kann, da der in der Filteranlage abgeschiedene Produktstrom der größte ist und verfahrensbedingt ohnehin die geringste Fracht an mechanischem Übertrag aufweist (siehe auch Tabelle 2). Der Windsichter kann in dieser Ausführungsform kleiner dimensioniert werden und ein bestehender Filter kann, sofern er die Kapazität hat, zur Abscheidung des Feinanteils des Windsichters genutzt werden.

Zweckmäßigerweise ist der Windsichter auf eine Trennschärfe von 5µm bis 100µm, vorzugsweise 5µm bis 25µm, noch vorzugsweise 5µm bis 20µm oder 10µm bis 25µm, eingestellt.

Die Erfindung schafft ferner ein Wälzoxid und Verwendungen.

Weitere Einzelheiten, Merkmale und Vorteile der Gegenstände der Erfindung ergeben sich aus der nachfolgenden Beschreibung, den Figuren und den Ansprüchen.

### Figuren Kurzbeschreibung

Fig. 1 illustriert eine erfindungsgemäße Anlage.
Fig. 2 illustriert die chemischen Prozesse im Drehrohrofen.
Fig. 3 veranschaulicht das erfindungsgemäße Verfahren.

### Detaillierte Beschreibung von Ausführungsbeispielen

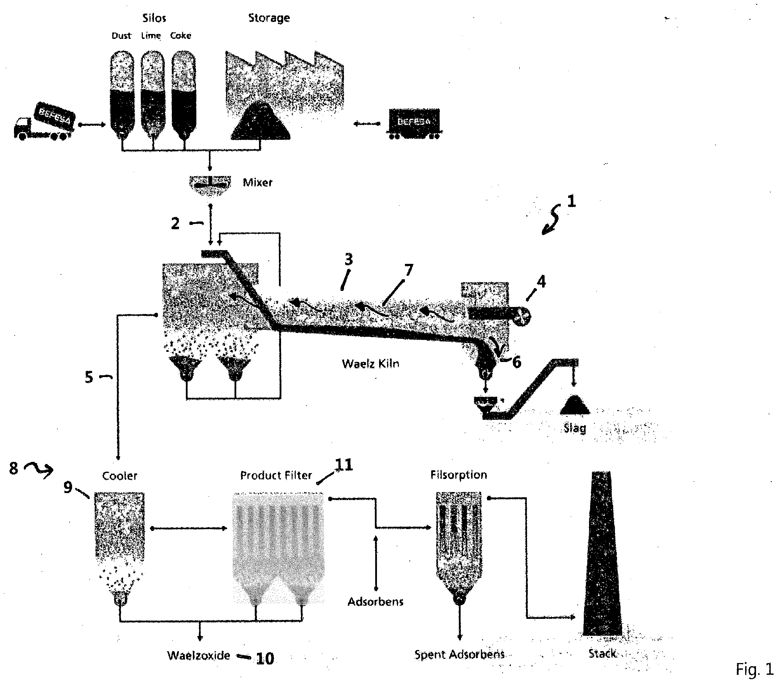

Die in **Fig. 1** schematisch illustrierte Anlage 1 umfasst einen ofeneintragsseitig mit Betriebsstoffen 2 beschickbaren Drehrohr- oder Wälzofen 3 und eine ggf. ofenaustragseitig angeordnete Gegenstromvorrichtung 4 sowie ggf. einen Ventilator zum Erzeugen eines Prozessabgasstroms 5, der sich entgegen der Schlackenabflussrichtung 6 entlang der Pfeile 7 zum ofeneintragsseitigen Ende des Drehrohrofens 3 erstreckend einer Anordung 8 zum Gewinnen von Wälzoxid daraus zugeführt wird.

Die Betriebsstoffe 2 können Stäube aus der Stahl- und Eisenherstellung, insbesondere aus der Elektrostahlindustrie, umfassen, die nach zweckmäßigem Zusatz von Koks und/oder anderen Kohlenstoff-Trägern beispielsweise in Form von Pellets dem Drehrohrofen 3 zugeführt werden können.

Beim Durchlaufen des zweckmäßigerweise leicht, z.B. 2°, geneigten Drehrohrofens 3 werden die Betriebsstoffe 2 sowie Schlackenbildner und/oder andere Zusatzstoffe allmählich auf die Betriebstemperatur von hier etwa 1.250°C erhitzt.

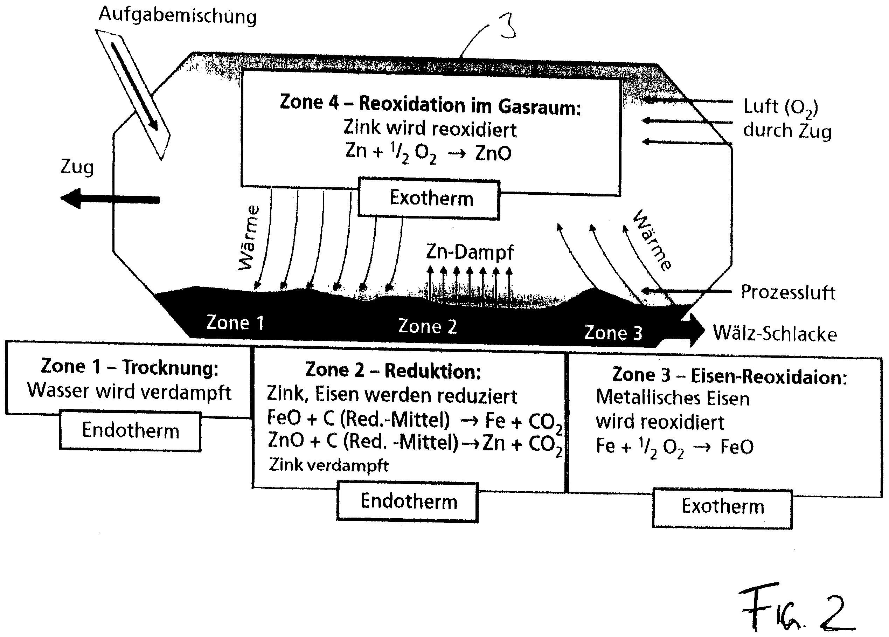

Die im Drehrohrofen 3 ablaufenden und im Stand der Technik bekannten chemischen Prozesse sind beispielhaft in **Fig. 2** veranschaulicht. Aus den Betriebsstoffen 2 werden Zink und Blei reduziert und verdampft. In der Ofenatmosphäre findet anschließend eine Rückoxidation unter Bildung des Wälzoxids statt. Die Schlacke wird mit einer Temperatur von beispielsweise 1.000°C bis 1.200°C aus dem Drehrohrofen 3 ausgetragen. Gegebenenfalls laufen andere Prozesse ab und/oder unter anderen Prozessbedingungen; dies ist nicht erfindungswesentlich.

Das der Anordnung 8 zugeführte Prozessabgas wird in der Anordnung 8 entstaubt. Die Anordnung 8 kann hierzu eine Kühlvorrichtung 9 aufweisen zum Abkühlen des Prozessabgases beispielsweise durch eine Wasser-/Luftquenche, z.B. auf eine Temperatur von 540°C bis 650°C, und/oder Verdampfungskühler und/oder dergleichen. Zweckmäßigerweise ist die Kühlvorrichtung 9 zumindest teilweise in einer Staubkammer 12 angeordnet, in der eine Grobabscheidung von zinkhaltigem Staub erfolgt. Der Staub kann abhängig von der Qualität dem Drehrohrofen 3 wieder zugeführt oder als Wälzoxid 10 weiterverarbeitet werden. Das in der Kühlvorrichtung 9, dort insbesondere im Verdampfungskühler, abgeschiedene Material bildet wiederum Wälzoxid 10. Der weiter abgekühlte Abgasstrom kann durch Filter 11 geführt werden, an denen nochmals Wälzoxid 10 herausgefiltert wird.

Erfindungsgemäß umfasst die Anlage 8 zusätzlich zumindest ein Aggregat zur Abtrennung des mechanischen Übertrags vom Wälzoxid, vorzugsweise einen Windsichter.

Das Wälzoxid kann am Ende der zusammengeführten Produktströme dem Windsichter zugeführt werden und/oder an einzelnen oder mehreren Anfallstellen des Wälzoxids. Insbesondere kann das Wälzoxid an den drei vorgenannten Anfallstellen mit einem Windsichter behandelt werden:
- An der Staubkammer: Hier ist der Zinkgehalt am niedrigsten, im Oxid sind Verunreinigungen, hauptsächlich mechanischer Übertrag aus dem Gegenstromprozess im Drehrohrofen (nachfolgendes Beispiel 3).
- Am Verdampfungskühler: Nach einer oder mehreren Umlenkungen im Bereich der Staubkammer sind die Verunreinigungen geringer (nachfolgendes Beispiel 2).
- Am Filter (nachfolgendes Beispiel 1).

Der Windsichter kann beispielsweise am Ende des Gesamtproduktstroms hinter einer letzten Wälzoxid-Förderschnecke installiert werden. Die Abluft des Filters des Windsichters kann insbesondere vor der Filteranlage des Wälzofens wieder eingespeist werden. Der Grobanteil kann z.B. über Schnecken und/oder Kettentrogförderer oder dergleichen wieder zum Ofeneintrag transportiert werden. Der Feinanteil, das möglichst reine Wälzoxid, wird beispielsweise in Produktsilos gefördert.

Es hat sich herausgestellt, dass eine Windsichter-Trennschärfe von 5µm bis 100µm eine erhebliche Steigerung des Wälzoxidertrags bewirkt, wie folgende Beispiele zeigen:

### Beispiel 1

Dem Windsichter wurde am Filter abgeschiedenes Wälzoxid zugeführt. Die Ergebnisse sind in nachfolgender Tabelle 1 zusammengestellt:

**Tabelle 1: Wälzoxid-Analyse Filter**

| Analyse in % | Filteroxid | mechanischer Übertrag - grob | gesichtetes Oxid - fein |
|---|---|---|---|
| Zn | 66,6 | 42,9 | 67,3 |
| Pb | 3,33 | 4,02 | 3,30 |
| S | 0,42 | 0,52 | 0,42 |
| c | 0,22 | 1,06 | 0,19 |
| FeO | 1,81 | 13,3 | 1,46 |
| MnO | 0,19 | 1,32 | 0,16 |
| CaO | 0,68 | 5,07 | 0,54 |
| MgO | 0,16 | 1,26 | 0,13 |
| Al₂O₃ | 0,04 | 0,44 | 0,03 |
| SiO₂ | 0,52 | 1,89 | 0,48 |
| Na₂O | 2,33 | 3,84 | 2,28 |
| K₂O | 2,90 | 4,75 | 2,84 |
| Cr | 0,02 | 0,20 | 0,02 |
| Cl | 4,33 | 7,76 | 4,22 |
| F | 0,06 | 0,36 | 0,05 |

Das dem Windsichter zugeführte Wälzoxid enthält Zinkoxid und andere Verbindungen. Zink bildet dabei als Element Zn 66,6 Gew.-% der 100 Gew.-% des zugeführten Wälzoxids. Nach Durchlauf des Wälzoxids durch den Windsichter mit Trennschnitt bei 25µm ergibt sich ein Anteil "grobes" Wälzoxid, d.h. mit Partikelgröße > 25µm, und ein Anteil "feines" Wälzoxid, d.h. mit Partikelgröße < 25µm. Der prozentuale Anteil von Zn im groben Wälzoxid beträgt 42,9 Gew.-%. Der prozentuale Anteil von Zn im feinen Wälzoxid beträgt 67,3 Gew.-%.

### Beispiel 2

Dem Windsichter wurde am Verdampfungskühler abgeschiedenes Wälzoxid zugeführt. Die Ergebnisse sind in nachfolgender Tabelle 2 zusammengestellt:

**Tabelle 2: Wälzoxid-Analyse Verdampfungskühler**

| Analyse in % | Verdampfungskühleroxid | mechanischer Übertrag - grob | gesichtetes Oxid - fein |
|---|---|---|---|
| Zn | 65,9 | 42,2 | 67,4 |
| Pb | 3,27 | 3,57 | 3,25 |
| S | 0,46 | 0,61 | 0,45 |
| c | 0,21 | 0,84 | 0,17 |
| FeO | 1,71 | 10,40 | 1,16 |
| MnO | 0,18 | 1,07 | 0,12 |
| CaO | 0,86 | 4,40 | 0,63 |
| MgO | 0,16 | 1,06 | 0,11 |
| Al₂O₃ | 0,05 | 0,36 | 0,03 |
| SiO₂ | 0,53 | 1,51 | 0,47 |
| Na₂O | 2,50 | 5,19 | 2,33 |
| K₂O | 3,07 | 6,54 | 2,85 |
| Cr | 0,02 | 0,17 | 0,01 |
| Cl | 4,66 | 10,20 | 4,31 |
| F | 0,10 | 0,53 | 0,07 |

### Beispiel 3

Dem Windsichter wurde in der Staubkammer abgeschiedenes Wälzoxid zugeführt. Die Ergebnisse sind in nachfolgender Tabelle 3 zusammengestellt:

**Tabelle 3: Wälzoxid-Analyse Staubkammer.**

| Analyse in % | Staubkammeroxid | mechanischer Übertrag - grob | gesichtetes Oxid - fein |
|---|---|---|---|
| Zn | 56,5 | 36,3 | 62,9 |
| Pb | 3,63 | 4,39 | 3,39 |
| S | 0,53 | 0,64 | 0,495 |
| c | 0,35 | 0,79 | 0,211 |
| FeO | 6,38 | 15,8 | 3,41 |
| MnO | 0,67 | 1,68 | 0,35 |
| CaO | 2,49 | 6,16 | 1,33 |
| MgO | 0,63 | 1,51 | 0,35 |
| Al₂O₃ | 0,21 | 0,54 | 0,11 |
| SiO₂ | 0,98 | 2,03 | 0,65 |
| Na₂O | 3,0 | 4,44 | 2,55 |
| K₂O | 3,83 | 5,65 | 3,26 |
| Cr | 0,08 | 0,25 | 0,02 |
| ci | 6,07 | 9,15 | 5,01 |
| F | 0,18 | 0,41 | 0,11 |

Die Auswertung der Beispiele zeigt eine Steigerung u.a. des Zinks im feinen Wälzoxid und eine Anreicherung des mechanischen Übertrags sowie von Fluor, Chlor, Kalium und Natrium im Grobanteil.

Bei einem Trennschritt bei 25µm wird folgende Rechnung für die Analyse des Feinanteils durchgeführt. Es wird eine Massenbilanz erstellt: "Welcher Anteil des Elements/der Verbindung geht in den groben oder in den feinen Anteil?". Beispielhaft für Zink im Staubkammeroxid (vorstehendes Beispiel 3):
- in der Ausgangsprobe liegen 56,5 % Zink vor
- im groben Anteil lassen sich 36,3 % Zink nachweisen
- die Massenbilanz ergibt, dass sich 16 % des Zinks der Ausgangsprobe im groben Anteil wiederfinden, 84 % im feinen (wenn der Feingutauszug 75 % beträgt)

Ein Trennschnitt bei kleineren Kerngrößen, beispielsweise 10µm ergibt ein noch reineres Produkt und erlaubt eine Anreicherung des Zinks in Feingutauszug auf 70 %.

### Detaillierte Beschreibung des Verfahrens und von Anwendungen

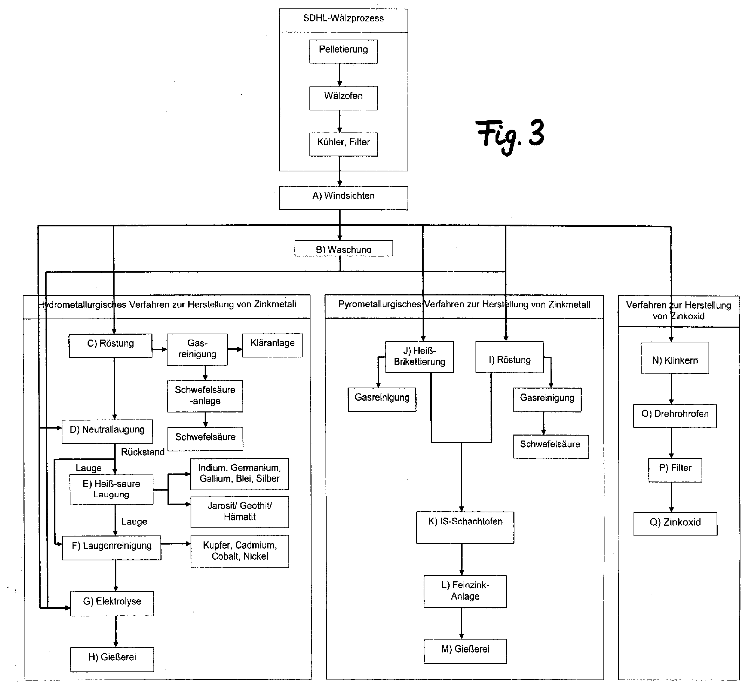

In den folgenden Ausführungen sind die Vorteile eines auf diese Weise raffinierten Zinkoxids zusammengefasst. Auf die Darstellung einer möglichen Einbringung in die bestehenden Prozesse in Form von Prozessfließbildern, erfolgt eine Beschreibung warum dies, im Vergleich zu herkömmlichem Wälzoxid oder Konzentrat möglich/vorteilhafter ist. Hierzu wird auf **Fig. 3** Bezug genommen, wobei der erste Verfahrensschritt stets der Wälzprozess ist, an welchen sich die Großbuchstaben A) bis Q) bezeichneten Verfahrensschritte anschließen, die für herkömmliches Wälzoxid und erfindungsgemäß gesichtetes Wälzoxid verglichen werden.

Tabelle 4 vergleicht Analysen für ungewaschenes Wälzoxid; die Analyse in der ersten Spalte stammt aus der Quelle "Sachbilanz Zink", die zweite und dritte Spalte die Spezifikationen von Befesa mit minimalen und maximalen und typischen Werten. Alle Prozentangaben sind Massenprozente.

### A) Neuer Prozessschritt Windsichten

Die 4. Spalte der Tabelle 5 enthält ein Beispiel für ungesichtetes Wälzoxid (WOX), in der 5. Spalte sind die Ergebnisse für dasselbe Produkt nach dem neuen Prozessschritt "Windsichten" angegeben.

Es stellen sich höhere Zinkinhalte bei geringerem Gehalt an Eisen, Kalk und den Oxiden von Mangan, Magnesium und Aluminium ein. Außerdem lässt sich der Fluorgehalt fast halbieren. Die prozentuale Veränderung/ Reduktion ist in der letzten Spalte der Tabelle angegeben (Vergleich ungesichtetes zu gesichtetem Wälzoxid). Außerdem weist das gesichtete Wälzoxid viel kleinere Korngrößen bei einem gleichmäßigeren Kornband auf, was vor allem einen positiven Einfluss auf die Laugung (Prozessschritte E und F) hat.

Die Menge an Produkt, die in den folgenden Prozessschritten behandelt werden muss, ist bei demselben Wertmetallinhalt, geringer.

**Tabelle 4: Vergleich der Analysen von ungewaschenen Wälzoxiden**

| Angaben in % | ungewaschenes Wälzoxid | | | | | |
|---|---|---|---|---|---|---|
| | Sachbilanz Zink | Spezifikation Befesa | Spezifikation Befesatypisch | Beispiel ungesicht etes WOX | Beispiel gesichtetes WOX | prozentuale Veränderung |
| Zn | 55-65 | 53-66 | 61,00 | 62,08 | 67,21 | 8,3 |
| Pb | 7-10 | 3-10 | 4,50 | 3,57 | 2,94 | -17,6 |
| Cd | < 0,5 | 0,01-0,5 | 0,15 | 0,138 | 0,118 | -14,5 |
| Cu | | 0,02-0,20 | 0,03 | 0,055 | 0,045 | -18,2 |
| Sn | | 0,01-0,25 | 0,02 | 0,038 | 0,032 | -15,8 |
| Bi | | | | 0,025 | 0,019 | -24,0 |
| S | 0,5-1 | 0,30-1,50 | 0,53 | 0,34 | 0,4 | 17,6 |
| C | | -2,5 | 0,70 | 0,28 | 0,12 | -57,1 |
| Fe | 2-3 | 0,8-4,7 | 2,2 | 3,23 | 0,94 | -70,8 |
| MnO | | 0,10-1 | 0,35 | 0,406 | 0,144 | -64,5 |
| CaO | | 0,30-4 | 2,42 | 1,49 | 0,48 | -67,8 |
| MgO | | 0,10-0,60 | 0,30 | 0,248 | 0,08 | -67,7 |
| AI2O3 | | 0,04-0,80 | 0,09 | 0,093 | 0,028 | -69,9 |
| SiO2 | | 0,15-3 | 0,45 | 0,397 | 0,29 | -27,0 |
| Na2O | | 0,70-3,4 | 2,10 | 2,83 | 2,52 | -11,0 |
| K2O | | 1-4 | 2,56 | 2,74 | 2,43 | -11,3 |
| Cl | 4-6 | 2,50-7 | 4,51 | 6,53 | 4,79 | -26,6 |
| F | | 0,08-0,55 | 0,15 | 0,11 | 0,06 | -45,5 |
| Korngröße | | | 90% <18µ | 87% <20µ | 100%<10µ | |
| | | | 50% < 8µ | 70% < 9µ | | |

### B) Nächster Prozessschritt Waschung

Stand der Technik ist die Waschung von Wälzoxid mit erwärmter Sodalösung. In Tabelle 5 sind die Analysen für gewaschene Wälzoxide aus denselben Quekllen wie in Tabelle 4 aufgeführt.

Als Vorteile des gewaschenen Wälzoxids, das zu vor gesichtet wurde, ergeben sich: höherer Zinkinhalt, geringere Gehalte vor allem an Fluor. Jene Vorteile, die unter Punkt A) bereits beschrieben sind, bleiben natürlich bestehen.

Nachdem das gesichtete Wälzoxid eine bessere Qualität in Bezug auf den Eintrag von Begleitelementen und Korngröße aufweist, kann in der Wäsche Soda eingespart werden bei besserer Qualität des Endprodukts: ein geringerer Eintrag von Kalk erleichtert die Entfernung des ohnehin durch das Windsichten schon verringerten Fluors.

**Tabelle 5: Vergleich der Analysen von gewaschenen Wälzoxiden**

| Angaben in % | gewaschenes WOX | | | | |
|---|---|---|---|---|---|
| | Sachbilanz Zink | Spezifikation Befesa | Spezifikation Befesatypisch | Beispiel ungesichtetes WOX | Beispiel gesichtetes WOX |
| Zn | 60-70 | 55-72 | 67 | 70,07 | 73,97 |
| Pb | 8-11 | 6-11 | 4,70 | 4,03 | 3,24 |
| Cd | < 0,5 | 0,05-0,20 | 0,10 | 0,16 | 0,13 |
| Cu | | 0,20-0,75 | 0,40 | 0,06 | 0,05 |
| Sn | | 0,05-0,25 | 0,05 | 0,04 | 0,04 |
| Bi | | | | 0,03 | 0,02 |
| S | <1 | 0,15-0,25 | < 0,10 | 0,38 | 0,44 |
| C | | 0,70-2,5 | < 1,50 | 0,32 | 0,13 |
| Fe | 2-3 | 0,8-4,7 | 2,3 | 3,64 | 1,04 |
| MnO | | 0,10-0,50 | 0,25 | 0,46 | 0,16 |
| CaO | | 0,20-3,00 | 1,50 | 1,68 | 0,53 |
| MgO | | 0,01-0,50 | 0,20 | 0,28 | 0,09 |
| Al₂O₃ | | 0,01-1,00 | 0,15 | 0,10 | 0,03 |
| SiO2 | | 0,20-1,25 | 0,5 | 0,45 | 0,32 |
| Na2O | | 0,10-0,30 | < 0,15 | 0,48 | 0,43 |
| K2O | | 0,05-0,10 | < 0,10 | 0,08 | 0,07 |
| CI | < 0,1 | 0,05-0,25 | 0,15 | 0,13 | 0,10 |
| F | | 0,05-0,25 | 0,15 | 0,12 | 0,07 |

Fig. 3 illustriert sich an die Waschung gemäß Schritt B) anschließende erfindungsgemäße Prozesse und Verwendungen zur Erzeugung von Zinkmetall, die nachfolgend erläutert werden:

### Hydrometallurgische Erzeugung von Zink

Die hydrometallurgische Zinkgewinnung teilt sich in die Schritte Röstung, Laugung, Laugenreinigung, Gewinnungselektrolyse und Gießerei auf. Im folgenden Abschnitt werden diese Schritte beschrieben, es wird auf das Prozessfließbild gemäß Fig. 3, linker Prozesszweig, verwiesen. Im Anschluss an die einzelnen Prozessschritte werden die Vorteile des Einsatzes von gesichtetem Wälzoxid beschrieben.

### C) Röstung

Die Röstung dient der Oxidation des Schwefels in den sulfidischen Konzentraten. Gewaschenes und ungewaschenes Wälzoxid wird in die Wirbelschicht oder auf das Sinterband direkt miteingebracht um zu kühlen. Produkte der Röstung sind Schwefelsäure und Kalzinat - das oxidische Zinkkonzentrat, das in den nächsten Prozessschritt "Neutrallaugung" weitergeführt wird.

Die Elemente Cl, Na, K und Fluor werden normalerweise beim Waschen entfernt. Die Gehalte dieser Elemente können aber auch beim Rösten gesenkt werden.

**Die Vorteile durch Einsatz des gesichteten Produkts:**
- geringerer Eiseneintrag somit kann sich nicht so viel Zinkferrit (ZnFe₂O₄) bilden (siehe auch Prozessschritt heiß-saure Laugung)
- die geringere Menge an taubem Material, das durch den Prozess geschleust werden muss.

Zur Verdeutlichung der Verbesserungen sei hier ein Rechenbeispiel angeführt:
Für die Produktion von einer Tonne Feinzink werden 1,9 t Zinkkonzentrat eingesetzt, die 7,5 % Eisen enthalten. Werden 20 % des Konzentrats durch gewaschenes herkömmliches Wälzoxid ersetzt, sinkt die in die Röstung eingebrachte Eisenmenge bereits um 9 %. Ein Einsatz von gesichtetem gewaschenen Wälzoxid vermindert diesen Eintrag noch einmal, im Verlgeich zum Konzentrat insgesamt um 18 %. Gleichzeitig steigt der Zinkeintrag um 8 %.

### D) Neutrallaugung

In der Neutrallaugung werden die oxidischen zinkhaltigen Einsatzstoffe bei geringen Schwefelsäurekonzentrationen aufgelöst. Das bei der Röstung der sulfidischen Konzentrate gebildete Zinkferrit (ZnFe2O4) bleibt bei diesem Prozessschritt zurück.

**Vorteil beim Einsatz von erfindungsgemäßem Wälzoxid in diesem Prozessschritt:** geringere Menge an Neutrallaugungsrückstand vor allem aufgrund der geringeren Menge an Eiseneintrag und somit auch ein geringerer Bedarf heißer saurer Lauge.

Das Bestreben in der Neutrallaugung ist es den Anteil von gut löslichen Zinkverbindungen vor dem Einsatz im Laugungsprozess zu steigern. Dies kann durch den Einsatz von windgesichtetem Wälzoxid entscheidend verbessert werden.

Einsatzstoffspezifisch kann dadurch die Laugungstemperatur im Temperaturbereich zwischen 30-50°C, der Einsatz des Laugungsmittels Schwefelsäure und die Belastung der technischen Ausrüstungen im Verfahrensschritt Neutrallaugung optimiert und gesenkt werden.

Durch die kleine Korngröße kann die Lösungsgeschwindigkeit erhöht und die Sättigungslöslichkeit erweitert werden. Das heißt es lässt sich eine höhere Zinkionen-Konzentration in der Prozesslösung herstellen. Die chemische Kinetik des Laugungsprozesses wir durch Einsatz von windgesichtetem Wälzoxid verbessert. Das heißt der Zeitbedarf wird gesenkt und Ausbeute wird optimiert.

Diese Vorteile ergeben anlagentechnisch eine Entlastung der aufzuwendenden Energiemenge (elektrische Energie, Druckluft) und führen damit zur Optimierung der spezifischen Energieausbeute und des Zinkausbringens, da die hauptsächlich eingesetzten Verfahrenstechnik der Laugung Rührwerksbehälter oder Autoklav-Behälter mit integrierten Rührwerken sind. Der Leistungsbedarf und die technische Ausführung von Rührwerksbehältern und Autoklaven ist u.a. abhängig von der Partikelgröße, der Viskosität der Lösung. Beide Faktoren können durch den Einsatz von windgesichtetem Wälzoxid hinzu geringerem Aufwand verschoben werden.

Der technisch angewendete Einsatz von Sauerstoff in der Drucklaugung (Autoklav-Laugung) kann durch die Absenkung und Vergleichmäßigung der Korngröße optimiert werden.

Ein verringerter Einsatz von z.B. durch einen Wirbelschichtofen erzeugtes Röstgut (Korngröße zwischen 500-1000 µm) durch Einsatz mit windgesichtetem Wälzoxid (10 µm und kleiner) in den Laugungsprozess senkt die Kosten für die Mahlung des Röstgutes, da Rührwerkslaugungen unter 100 µm betrieben werden sollen. Die Löstichkeit, die Pumpbarkeit der Lösung wird verbessert.

Es fallen spezifisch weniger schwertöstiche Verbindungen und Rückstände an, welche in nachfolgenden Prozessen entfernt, verarbeitet bzw. entsorgt werden müssen.

### E) Heiß-saure Laugung

Bei ca. 95°C wird der Neurtrallaugungsrückstand, der das Zinkferrit enthält, aufgelöst. Auch bei diesem Laugungsschritt verbleibt ein Rückstand der hauptsächlich Blei und Silber enthält, er wird an Bleihütten verkauft.

Die Zinklösung aus diesem Laugungsschritt enthält neben Zink auch Eisen, Kobalt, Nickel, Arsen und Germanium. Bevor diese Zinklösung mit jener aus der Neutrallaugung im nächsten Prozessschritt "Laugenreinigung" zusammengeführt wird, muss das Eisen entfernt werden. Dazu sind erfindungsgemäß 3 Verfahren im Einsatz:
- **Jarositverfahren:** Eisen wird mithilfe einer Zugabe von Alkali- oder Ammonium-Salzen in das Mineral Jarosit überführt und abgeschieden. Es fallen ca. 480 kg Jarosit trocken je Tonne Feinzink an. Das Jarositverfahren ist weit verbreitet.
- Goethitverfahren: das Eisen wird in der Mineralform Goethit abgeschieden. Das Verfahren zeichnet sich durch geringere Rückstandsmengen von 390 kg trocken je Tonne Feinzink aus.
- Hämatitverfahren: ist das einzige Verfahren bei dem ein industriell verwertbarer Rückstand entsteht, es wird industriell aber kaum eingesetzt.

Die Rückstände der beiden erstgenannten Verfahren haben zurzeit keinen industriellen Einsatz und müssen aufgrund der Schwermetallbelastung und auch ihrer Konsistenz (feiner Schlamm) aufwendig deponiert werden.

**Vorteil des erfindungsgemäßen Wälzoxids:** geringere Menge an Rückstand je Tonne produziertem Zink und somit zu deponierendem Material. Nachdem der Rückstand mehrere Prozent Zink enthält, ergibt sich ein geringerer Zinkverlust über den ausgetragenen Reststoff. Die verringerte Menge, die in diesen Prozessschritt eingetragen wird, vermindert zudem den Resourcenbedarf.

Anschließend an das Rechenbeispiel unter C-Röstung:
Beim Einsatz von 1,9 t Zinkkonzentrat entstehen 480 kg Jarosit (trockene Menge). Werden 20 % dieser Menge durch herkömmlilches gewaschenes Wälzoxid ersetzt, entstehen ca. 50 kg Jarosit trocken weniger. Nimmt man statt herkömmlilchem gewaschenem Wälzoxid gesichtetes gewaschenes Wälzoxid, lässt sich diese Menge um weitere 35 kg senken.

### F) Laugenreinigung

In der Laugenreinigung werden jene gelösten Metalle aus der Lauge entfernt, die edler sind als Zink. Dazu wird metallischer Zinkstaub in mehreren Schritten zugegeben und diese Metallionen zementiert. Nacheinander fallen beginnend bei den edelsten Metallen zum Beispiel Kupfer, Cadmium und Kobalt aus. Uneldere Kationen wie Na+, K+ und Al3+ verbleiben in der Lösung.

**Vorteil des erfindungsgemäßen Wälzoxids:** Es wird eine geringere Menge an zu fällenden Kationen eingetragen, somit muss weniger Zinkstaub aufgelöst werden. Der Prozess wird chargenweise betrieben und kann schneller erfolgen wenn die eingetragene Menge an zu zementierenden Elementen geringer ausfällt. Durch die Einsparung an teurem metallischem Zinkstaub und die kürzeren Behandlungszeiten ergibt sich vor allem ein positiver Effekt auf die Kosten.

### G) Zinkelektrolyse

Der gereinigte Elektrolyt wird in die Elektrolysebäder eingeführt und bei einer Zellspannung von 3,3-3,5 Volt und einer Stromdichte von 400-600 A/m² metallisches Zink an den Aluminiumkathoden abgeschieden. Die Anoden bestehen aus einer Blei-Silber-Legierung.

### G 1) Wasserstoffüberspannung:

Unter diesen Bedingungen würde sich theoretisch auch Wasserstoff an den Kathoden abscheiden und somit der Elektrolyt zersetzt (Zink ist unedler als Wasserstoff). Dass dies nicht der Fall ist, ist der sogenannten Wasserstoffüberspannung zu verdanken: Wasserstoff ist ein Gas, dessen Bildung an der Kathode ein höhere Energie zur Keimbildung benötigt, als in der Elektrolyse normalerweise zur Verfügung steht. Somit ist die Bildung von Wasserstoff an den glatt polierten Aluminiumblechen erschwert. Zusätzlich werden die Kathoden schon nach 2 Tagen aus den Elektrolysebädern entnommen und gestrippt, um die Zinkschicht dünn zu halten - eine dickere Zinkschicht vereinfacht die Wasserstoffbildung. Eine geringe Badtemperatur ist ebenfalls hilfreich, da die Wasserstoffüberspannung mit steigender Temperatur abnimmt.

Eisen und Kupfer im Elektrolyten erniedrigen die Wasserstoffüberspannung und erleichtern somit die Gasbildung. Im Elektrolyt gelöstes Arsen, Antimon, Tellur, Germanium, Nickel und Selen führen auf dieselbe Weise zur Wasserstoff-Gasbildung.

Kommt es zur Wasserstoffbildung an den Kathoden, muss die Badspannung erhöht werden, da die Wasserstoffbläschen die Abscheidung des Zinks verhindern.

### G 2) Ausfallen von Gips:

Niedrige Temperaturen in der Elektrolyse führen zu einer geringeren Stromausbeute. Die hohe Zellspannung führt dazu, dass sich der Elektrolyt erwärmt, sodass der Elektrolyt gekühlt werden muss (siehe zB. Wasserstoffüberspannung). Bei der Kühlung fällt Gips aus und führt zu Ablagerungen in Leitungen und Armaturen, die einen hohen Reinigungsaufwand nach sich ziehen.

### G 3) Viskosität des Elektrolyten:

Die unedleren Kationen der Alkalimetalle (Na, K) und Erdalkalimetalle (Ca, Mg) sind unelder als Zink und werden in der Elektrolyse nicht abgeschieden. Erhöhte Gehalte dieser Elemente erhöhen aber die Elektrolytviskosität und verlangsamen so die Diffusion im Bad. Dieselbe Wirkung haben die Metalle Lithium, Aluminium und Mangan.

### G 4) Lokalelementbildung:

Zu hohe Gehalte an Nickel, Kupfer und Kobalt führen zur Lokalelementbildung, das bedeutet, dass sich an der Kathode bereits abgeschiedenes Zink aufgrund des edleren Charakters dieser Elemente wieder auflöst.

**G 5) Verunreinigungen des abgeschiedenen Zinks** werden durch alle Metalle, die im Elektrolyten gelöst und edler sind als Zink verursacht, also hier hauptsächlich Zinn, Cadmium und Tellur sowie die eventuell vorhandenen Edelmetalle.

**G 6) Erhöhung der Badspannung:** Eisen, Nickel, Arsen, Antimon, Selen, Tellur und Germanium sind edler als Zink und erhöhen die Badspannung. Fluor und Chlor haben denselben Effekt, führen aber zusätzlich zu Punkt G 7).

**G 7) Korrosion der Kathoden und Anoden:** durch Chlor und Fluor. Fluor ist besonders schädlich für die Kathoden, es liegt in Form von NaF oder KF im Elektrolyten vor und führt zur Aufrauhung der Oberfläche der Kathoden. Abgeschiedenes Zink lässt sich in Folge schwerer strippen. Die Korrosion durch Fluor an der Anode erschwert die Abscheidung zum Beispiel von Sauerstoff und Mangan an der Anode und führt somit wiederum zu einer erhöhten Badspannung. Die Zerstörung der Bleianoden durch Korrosion ist ein massiver Kostenfaktor in der Zinkhütte.

### Vorteil des erfindungsgemäßen Produkts:

Zusammengefasst ist der Eintrag der folgenden Elemente in die Elektrolyse negativ zu bewerten: Fe, Cu, Ni, Cd, Co, Ca, Mg, Li, Al, Mn, Sn, As, Sb, Se, Te, Ge, Na, K F und CI.

Beim Vergleich dieser Elemente mit der in Tabelle 1 aufgeführten Analyse für windgesichtetes Wälzoxid, zeigt sich, dass ein Einsatz von gesichtetem Wälzoxid für alle analysierten Elemente Vorteile birgt und so zum Beispiel weniger Zinkferrit oder weniger Gips gebildet wird.

Zusammengefasst führen die Produkteigenschaften des gesichteten Wälzoxids in allen Prozessschritten zu entscheidenden Verbesserungen. Durch Windsichten optimiertes Wälzoxid ist in den Gehalten störender Elemente so abgereichert, dass die oben beschriebenen Prozessschritte auch teilweise oder insgesamt ausgelassen werden können und das Produkt direkt nach der Windsichtung im schwefelsauren Badelektrolyten aufgelöst werden kann und dem Prozessschritt G) Elektrolyse zugeführt werden kann. Die sehr aufwendigen vorbereitenden Prozessschritte lassen sich umgehen.

### H) Gießerei

In der Gießerei werden die Kathoden eingeschmolzen und in der gewünschten Form abgegossen.

### Pyrometallurgische Herstellung von Zink

### Imperial-Smelting-Process

Pyrometallurgisch kann Zink über das IS-Verfahren (Imperial-Smelting-Process) gewonnen werden. Dabei wird Zink und Blei kombiniert gewonnen. Die Rohstoffbasis aus sulfidischen und oxidischen Vorstoffen verschiebt sich schrittweise hin zu einem höheren Anteil oxidischer Einsatzstoffe (wie z.B. Wälzoxid). Das Verfahren gliedert sich in die Verfahrensschritte Röstung, Heißbrikettierung, den IS-Schachtofenprozess und die Zinkraffination (Feinzinkanlage) mit der Gießerei.

### I) Röstung

Die Röstung dient der Oxidation des Schwefels in den eingesetzten sulfidischen Konzentraten. Der oxidierte Schwefel wandelt sich zu Schwefeldioxid-haltigem Abgas um, das in der nachfolgenden Filteranlage und mittels Kontaktverfahren zu Schwefelsäure umgesetzt wird. Zum Einsatz kommen z.B. Sinteranlagen die einen heißen, stückigen, druckfesten ZnO-haltigen Sinter für den als Haupteinsatzmaterial für den IS-Schachtofen erzeugen.

Zur verbesserten Prozessführung in Bezug auf Feuchte und Zink-Gehalt der Röstung sowie zur Verringerung des Schwefelanteils und somit zur Verringerung der Kosten für den Betrieb der Abgasbehandlung, wird der zu röstenden Mischung ein Anteil an oxidischen Sekundärmaterialen, z.B. Wälzoxid zugemischt. Die Senkung der Kosten für die Gasreinigung nach Sinteranlagen ist wirtschaftlich zwingend erforderlich und wird vorangetrieben. Gründe sind die Aufwendungen für Rückstandsentsorgung (Quecksilber, Cadmium, Thallium, organische Kohlenwasserstoffe als Begleiter des Zinks im Konzentrat) sowie steigende Qualitätsanforderungen an das Produkt Schwefelsäure und den kostenintensiven Anlagenbetrieb.

**Vorteile durch den Einsatz von erfindungsgemäß windgesichtetem Wälzoxid:** Windgesichtetes Wälzoxid verringert den Eisen- und Kalkeintrag in den Sinter und somit die zu verschlackende Menge im IS-Schachtofenprozess. Chlor- und Fluorverbindungen führen zu korrosivem Angriff im Bereich der Anlagentechnik. Ein verringerter Eintrag an Fluor und Chlor entlastet somit die Gasreinigungsanlage der Röstung. Der Ersatz des sulfidischen Einsatzstoffs durch oxidische Zinkträger in der Röstung, ist durch den anzustrebenden SO₂-Gehalt von mindestens 3-4 % im Abgas, limitiert. Aktuell werden Sinteranlagen zwischen 5-10 Vol.-% SO₂ im Abgas betrieben, es gibt also noch Kapazitäten für den Einsatz von windgesichtetem Wälzoxid.

### J) Heißbrikettierung

Metallurgische Reststoffe werden für den Einsatz im IS-Schachtofen heiß brikettiert. Es werden interne Kreislaufmaterialien, Stahlwerksstaub, Zinkmetallhaltige Aschen und Krätzen, Trasse und Wälzoxid kontinuierlich gemischt, pelletiert, ggf. mit Bindemitteln versetzt und anschließend z.B. mittels Drehrohrofen erweicht und vorgeheizt (auf ca. 300 °C). Das vorgeheizte Material wird mittels Walzenpressen zu Briketts verdichtet und anschließend im IS-Schachtofen gemeinsam mit vorgeheiztem Koks und Sinter aus der Röstanlage chargiert. Die chemische Zusammensetzung und die physikalischen Eigenschaften machen Wälzoxid optimal für das Pressen auf Walzen. Die einheitliche Korngröße, der konstante Zinkgehalt und die bindenden Eigenschaften des Wälzoxids sind erforderlich um druckfeste und formstabile Briketts zu erzeugen.

**Vorteil durch den Einsatz von erfindungsgemäß windgesichtetem Wälzoxid:** Verunreinigungen wie Fluor und Kupfer können beim Windsichten reduziert werden wodurch der aufwendige Gasreinigungsprozess nach einer Heißbrikettierung entlastet wird. Die Entfernung von Chlor (Waschen) Fluor und Kupfer senkt das Potentials der Dioxin-/Furan-Bildung (Abscheidung im Aktivkohlefilter).

### K) IS-Schachtofen

Der thermische Reduktionsprozess im Schachtofen beruht auf der Verbrennung des vorgeheizten Kokses im Gemisch mit ZnO-haltigem Sinter und Heißbriketts. Der brennende Koks schafft eine reduzierende Kohlenmonoxidatmosphäre. Dabei bildet sich gasförmiges Zink Metall, welches über den Abgasstrom dem Kondenser, einem Bad gefüllt mit schmelzflüssigem Blei, zugeführt wird. Dort wird es gekühlt und aufgrund seiner Löslichkeit abgeschieden. Das Zink schwimmt schmelzflüssig auf der Bleischmelze auf und wird dann über Abscheiderinnen gewonnen. Der Eiseninhalt der Vorstoffe wird verschlackt. Das gewonnene Blei wird periodisch aus dem Ofensumpf abgestochen. Das schmelzflüssige Zink wird weiter raffiniert und anschließend in Formate vergossen und verkauft.

Die Schlacke enthält noch 4-5 % Zink und führt so unweigerlich zu einem Zinkverlust.

**Vorteile durch den Einsatz von erfindungsgemäß windgesichtetem Wälzoxid:** Windgesichtetes Wälzoxid enthält weniger Eisen, somit ist die in den IS-Schachtofen eingeführte Menge an zu verschlackenden Komponenten vermindert, wodurch der Koksverbrauch gesenkt werden kann. Außerdem verringert sich der Zinkverlust in einer geringeren Schlackenmenge.

### Verfahren zur Herstellung von Zinkoxid

### L) Amerikanisches Verfahren/ Direktverfahren

Beim direkten oder auch amerikanischen Verfahren werden die Einsatzstoffe zu allererst geröstet. Dabei wird oxidiertes Zink zunächst durch Kohlenstoff reduziert, verdampft und in einer separaten Kammer mit Luftsauerstoff zu Zinkoxid reoxidiert. Als Einsatzstoffe dienen Zinkerze oder -Schrott.

Nachdem für das Endprodukt niedrige Bleiwerte notwendig sind, muss beim Einsatz von Wälzoxid zuvor geklinkert werden. Dabei werden neben dem Blei auch die Alkalimetalle und Halogene verflüchtigt. Das feine Zink wird in einem Tuchfilter abgeschieden und als Pulver an die Futtermittel-, Glas-, Gummi- oder Pigmentindustrie verkauft.

Windgesichtetes Wälzoxid kann als Einsatzstoff in Betracht gezogen werden.

Weitere Anwendungen können sein:
- technisches Zinkoxid für die Reifen- und Gummiherstellung
- Düngemittelindustrie
- Futtermittelindustrie
- Zementproduktion
- Glas- und keramische Industrie
- Farbpigmente
- Papierindustrie

### Bezugszeichenliste

- 1: Anlage
- 2: Betriebsstoffe
- 3: Drehrohr- oder Wälzofen
- 4: Gegenstromvorrichtung
- 5: Prozessabgasstrom
- 6: Schlackenabflussrichtung
- 7: Pfeil
- 8: Anordung zum Gewinnen von Wälzoxid
- 9: Kühlvorrichtung
- 10: Wälzoxid
- 11: Filter
- 12: Staubkammer

## Patentansprüche

1. Verfahren zum Gewinnen von hochreinem Wälzoxid (10) aus zinkhaltigen Rohstoffen (2) wie etwa Stäuben aus der Eisen- und Stahlherstellung, bei dem ein Drehrohrofen (3) mit den Rohstoffen (2) und ggf. Reaktionsstoffen beschickt wird, der Drehrohrofen (3) im Gegenstromverfahren betrieben wird, die Prozessabgase (5) aus dem Drehrohrofen (3) Zinkoxid führen, das in Abscheideaggregaten wie Elektrofilter oder dergleichen als Wälzoxid (10) gewonnen wird, wobei das Prozessabgas (5) aus dem Drehrohrofen (3) durch eine Staubkammer, eine Kühlvorrichtung (9) und einen Filter (11) geführt wird, wobei jeweils Wälzoxid (10) abgeschieden wird, wobei das Wälzoxid (10) von dem Filter (11) mit dem Wälzoxid (10) von der Staubkammer und/oder dem Wälzoxid (10) von der Kühlvorrichtung (9) zusammengeführt wird, wobei zum Entfernen des mechanischen Übertrags aus dem Wälzoxid (10) das zusammengeführte Wälzoxid (10) oder das Wälzoxid (10) von der Staubkammer und/oder das Wälzoxid (10) von der Kühlvorrichtung jeweils einer Einrichtung zur Abtrennung des mechanischen Übertrags, vorzugsweise einem Windsichter, zugeführt wird.

2. Verfahren nach Anspruch 1, **dadurch gekennzeichnet, dass** der Windsichter auf eine Trennschärfe zum Abtrennen von Verunreinigungen eingestellt ist, wobei der Windsichter vorzugsweise auf eine Trennschärfe von 5 µm bis 100 µm eingestellt ist.

3. Verfahren nach Anspruch 1 oder 2, **dadurch gekennzeichnet, dass** die am Windsichter abgetrennten Verunreinigungen dem Drehrohrofen (3) erneut zugeführt werden.

4. Verfahren nach einem der Ansprüche 1 bis 3, **dadurch gekennzeichnet, dass** sich eine Waschung mit erwärmter Sodalösung anschließt, und/oder sich einer oder mehrere der Verfahrensschritte C) bis Q) (Fig. 3) anschließen.

5. Anlage (8) zum Gewinnen von hochreinem Wälzoxid (10) aus zinkhaltigen Rohstoffen (2) wie etwa Stäuben aus der Eisen- und Stahlherstellung, umfassend einen im Gegenstromverfahren betreibbaren Drehrohrofen (3) zur Beschickung mit den Rohstoffen (2) und ggf. Reaktionsstoffen, wobei im Prozessabgasstrom (5) zur Gewinnung des Wälzoxids (10) aus abgeleitetem Prozessabgas (5) eine Staubkammer, eine Kühlvorrichtung (9) und ein Filter (11) angeordnet sind, wobei die Anlage (8) zum Zusammenführen des Wälzoxids (10) aus dem Filter (11) mit dem Wälzoxid (10) aus der Staubkammer und/oder dem Wälzoxid (10) aus der Kühlvorrichtung (9) ausgebildet ist, wobei ein Windsichter am zusammengeführten Wälzoxid-Gesamtproduktstrom oder an der Staubkammer und/oder an der Kühlvorrichtung (9) vorgesehen ist.

6. Anlage (8) nach Anspruch 5, **dadurch gekennzeichnet, dass** der Windsichter auf eine Trennschärfe zum Abtrennen von Verunreinigungen eingestellt ist, insbesondere eine Trennschärfe von 5 µm bis 100 mm aufweist.

7. Anlage (8) nach Anspruch 5 oder 6, **dadurch gekennzeichnet, dass** eine Zuführung der am Windsichter abgetrennten Verunreinigungen zum Drehrohrofen (3) vorgesehen ist.

8. Verwendung einer Anlage nach einem der Ansprüche 5 bis 7 zur Bereitstellung eines Wälzoxids (10) mit einer Korngröße von 10 µm und kleiner zur Gewinnung von Zink.

9. Verwendung des Verfahrens nach einem der Ansprüche 1 bis 4, in einem hydrometallurgischen Verfahren zur Herstellung von Zinkmetall, in einem pyrometallurgischen Verfahren zur Herstellung von Zinkmetall, und/oder in einem Direktverfahren zur Herstellung von Zinkmetall oder Zinkverbindungen wie Zinkoxid.

10. Wälzoxid (10), das aus einer Staubkammer, einem Verdampfungskühler und/oder einem Filter (11) raffiniert wird und vor oder nach der Raffination der einzelnen Produktströme durch Abtrennen des mechanischen Übertrags mit einem Verfahren nach einem der Ansprüche 1 bis 4 raffiniert ist, **dadurch gekennzeichnet, dass** das Wälzoxid (10) eine Korngröße von 10 µm und kleiner aufweist.

## Claims

1. Method for obtaining high-purity Waelz oxide (10) from zinc-bearing raw materials (2) such as dusts from iron and steel production, in which a rotary kiln (3) is charged with the raw materials (2) and optionally reactants, the rotary kiln (3) is operated in countercurrent process, the process waste gases (5) entrain zinc oxide out of the rotary kiln (3), which is recovered as Waelz oxide (10) in separation units such as electrostatic filters or the like, wherein the process waste gas (5) is passed out of the rotary kiln (3), through a dust chamber, a cooling apparatus (9) and a filter (11), wherein Waelz oxide (10) is separated in each, wherein the Waelz oxide (10) from the filter (11) is combined with the Waelz oxide (10) from the dust chamber and/or the Waelz oxide (10) from the cooling apparatus (9), wherein in order to remove the mechanically entrained substance from the Waelz oxide (10) the combined Waelz oxide (10) or the Waelz oxide (10) from the dust chamber and/or the Waelz oxide (10) from the cooling apparatus are each fed to a device for separating the mechanically entrained substances, preferably a wind sifter.

2. Method according to claim 1, **characterized in that** the wind sifter is set to a selectivity for the separation of impurities, wherein the wind sifter is preferably set to a selectivity from 5 µm to 100 µm.

3. Method according to claim 1 or 2, **characterized in that** the impurities separated at the air wind sifter are returned again to the rotary kiln (3).

4. Method according to any one of claims 1 to 3, **characterized in that** scrubbing with warmed soda solution follows, and/or one or more of the method steps C) to Q) (Fig. 3) follow.

5. Plant (8) for obtaining high-purity Waelz oxide (10) from zinc-bearing raw materials (2) such as dusts from iron and steel production, comprising a countercurrent rotary kiln (3) which is operable in countercurrent process for charging with the raw materials (2) and optionally reactants, wherein a dust chamber, a cooling apparatus (9) and a filter (11) are arranged in the process waste gas stream (5) for recovering the Waelz oxide (10) from diverted process waste gas (5), wherein the plant (8) is designed for combining the Waelz oxide (10) from the filter (11) with the Waelz oxide (10) from the dust chamber and/or the Waelz oxide (10) from the cooling apparatus (9), wherein a wind sifter is provided on the combined Waelz oxide total product stream or on the dust chamber and/or on the cooling apparatus (9).

6. Plant (8) according to claim 5, **characterized in that** the wind sifter is set to a selectivity for the separation of impurities, in particular the wind sifter has a selectivity from 5 µm to 100 µm.

7. Plant (8) according to claim 5 or 6, **characterized in that** a supply of the impurities separated at the wind sifter is provided to the rotary kiln (3).

8. Use of a plant according to any one of claims 5 to 7 for preparing a Waelz oxide (10) having a grain size of 10 µm and smaller for the recovery of zinc.

9. Use of the method according to any one of claims 1 to 4 in a hydrometallurgical process for obtaining metallic zinc, in a pyrometallurgical process for obtaining metallic zinc, and/or in a direct process for obtaining metallic zinc or zinc compounds such as zinc oxide.

10. Waelz oxide (10) which is purified from a dust chamber, an evaporative cooler and/or a filter (11) and is refined before or after the purification of the individual product streams by separation of the mechanically entrained substances with a method according to any one of claims 1 to 4, **characterized in that** the Waelz oxide (10) has a grain size of 10 µm and smaller.

## Revendications

1. Procédé permettant d'obtenir de l'oxyde Waelz (10) à haute pureté, à partir de matières brutes (2) contenant du zinc telles que les poussières issues de la fabrication du fer et de l'acier, et consistant à introduire les matières brutes (2) et, le cas échéant, des réactants dans un four rotatif (3), à faire fonctionner le four rotatif (3) selon un processus à contre-courant, les gaz d'échappement de procédé (5) issus du four rotatif (3) étant chargés en oxyde de zinc lequel est récupéré dans des appareils de précipitation tels que les filtres électriques et organes apparentés sous forme d'oxyde Waelz (10), les gaz d'échappement de procédé (5) traversant, depuis le four rotatif (3), une chambre à poussière, un dispositif de refroidissement (9) et un filtre (11) dont chacun provoque une précipitation d'oxydes Waelz (10), l'oxyde Waelz (10) récupéré dans le filtre (11) étant réuni avec l'oxyde Waelz (10) récupéré dans la chambre à poussière et/ou avec l'oxyde Waelz (10) récupéré dans le dispositif de refroidissement (9), l'oxyde Waelz réuni (10) ou bien l'oxyde Waelz (10) récupéré dans la chambre à poussière et/ou l'oxyde Waelz (10) récupéré dans le dispositif de refroidissement étant chacun introduit dans un organe permettant d'en séparer les matières entraînées par effet mécanique, s'agissant préférentiellement d'un séparateur pneumatique, afin de séparer l'oxyde Waelz (10) des matières entraînées par effet mécanique.

2. Procédé selon la revendication 1, **caractérisé en ce que** le séparateur pneumatique est réglé à une sélectivité permettant de séparer des impuretés, ledit séparateur pneumatique étant préférentiellement réglé à une sélectivité comprise entre 5 µm et 100 µm.

3. Procédé selon les revendications 1 ou 2, **caractérisé en ce que** les impuretés séparées au niveau du séparateur pneumatique sont recyclées dans le four rotatif (3).

4. Procédé selon l'une des revendications 1 à 3, **caractérisé en ce qu'**il est suivi par un lavage avec une solution de soude chauffée et/ou par une ou plusieurs des étapes de procédé C) à Q) (Fig. 3).

5. Installation (8) permettant d'obtenir de l'oxyde Waelz (10) à haute pureté, à partir de matières brutes (2) contenant du zinc telles que les poussières issues de la fabrication du fer et de l'acier, et comprenant un four rotatif (3) apte à fonctionner selon un processus à contre-courant dans lequel on introduit lesdites matières brutes (2) et, le cas échéant, les réactants, une chambre à poussière, un dispositif de refroidissement (9) et un filtre (11) étant disposés dans le flux des gaz d'échappement de procédé (5) afin de récupérer l'oxyde Waelz (10) à partir des gaz d'échappement de procédé (5) évacués, l'installation (8) étant réalisée de manière à pouvoir réunir l'oxyde Waelz (10) récupéré dans le filtre (11) et l'oxyde Waelz (10) récupéré dans la chambre à poussière et/ou l'oxyde Waelz (10) récupéré dans le dispositif de refroidissement (9), un séparateur pneumatique étant prévu au niveau du flux global des produits de type oxyde Waelz réunis au niveau de la chambre à poussière et/ou au niveau du dispositif de refroidissement (9).

6. Installation (8) selon la revendication 5, **caractérisé en ce que** le séparateur pneumatique est réglé à une sélectivité permettant de séparer des impuretés, notamment à une sélectivité comprise entre 5 µm et 100 µm.

7. Installation (8) selon les revendications 5 ou 6, **caractérisée en ce qu'**elle comprend une conduite permettant d'introduire les impuretés, séparées dans le séparateur pneumatique, dans le four rotatif (3).

8. Utilisation d'une installation selon l'une des revendications 5 à 7 afin de mettre à disposition un oxyde Waelz (10) ayant une granulométrie inférieure ou égale à 10 pm, destiné à la production de zinc.

9. Utilisation du procédé selon l'une des revendications 1 à 4, dans un procédé d'hydrométallurgie permettant de produire du zinc métallique, dans un procédé de pyrométallurgie permettant de produire du zinc métallique et/ou dans un procédé direct permettant de produire du zinc métallique ou des composés de zinc tels que l'oxyde de zinc.

10. Oxyde Waelz (10) qui subit un raffinage à partir d'une chambre à poussière, d'un organe de refroidissement à évaporation et/ou d'un filtre (11) et qui subit, en amont ou en aval du raffinage de chacun des flux de produit par séparation des matières entraînées par effet mécanique, un raffinage mettant en œuvre un procédé selon l'une des revendications 1 à 4, **caractérisé en ce que** l'oxyde Waelz (10) présente un granulométrie inférieure ou égale à 10 µm.
